# EUROPÄISCHE PATENTSCHRIFT

(11) **EP 0 916 560 B1**
(45) Veröffentlichungstag und Bekanntmachung des Hinweises auf die Patenterteilung: **24.04.2002**
(21) Anmeldenummer: 98120053.8
(22) Anmeldetag: 23.10.1998
(51) Int. Cl.: B60S 3/06

(54) **Verfahren und Portalwaschanlage zum Waschen von Kraftfahrzeugen**
Method and washing gantry for washing of vehicles
Méthode et portique de lavage pour le lavage des voitures

(30) Priorität: 18.11.1997 DE 19751016
(43) Veröffentlichungstag der Anmeldung: 19.05.1999
(73) Patentinhaber: WashTec Holding GmbH, 86153 Augsburg (DE)
(72) Erfinder: Decker, Wolfgang, 86441 Zusmarshausen-Wollbach (DE)
(74) Vertreter: Rapp, Bertram, Dr.

(56) Entgegenhaltungen:
- DE-A- 2 231 846
- DE-C- 3 616 817
- US-A- 4 593 425
- US-A- 4 777 688

## Beschreibung

Die Erfindung betrifft ein Verfahren zum Waschen von Kraftfahrzeugen mit Dach- und Seitenwäsche in einer Portalwaschanlage mit zwei verfahrbaren Portalen, von denen jedes eine um eine horizontale Achse rotierende Waschbürste (= Horizontalwaschbürste) enthält, und mit um vertikale Achsen rotierenden Waschbürsten (= Vertikalwaschbürsten). Die Erfindung betrifft ferner eine Portalwaschanlage für Kraftfahrzeuge mit zwei verfahrbaren Portalen, von denen jedes eine um eine horizontale Achse rotierende Waschbürste (= Horizontalbürste) enthält und mit um vertikale Achsen rotierenden waschbürsten (= Vertikalbürsten).

Bei bekannten Portalwaschanlagen mit zwei Portalen, die getrennt verfahrbar oder auch miteinander gekuppelt sein können (vgl. DE 36 16 817 C1) sind im allgemeinen an jedem der beiden Portale eine Horizontalbürste und ein Paar von Vertikalbürsten angeordnet. Diese, für einen hohen Fahrzeugdurchsatz pro Stunde konzipierten Portalwaschanlagen benötigen jedoch verhältnismäßig viel Platz. Zusätzlich zur Fahrzeuglänge wird nämlich vor oder hinter dem Fahrzeug ein Stauraum benötigt, welcher der Länge der beiden Portale entspricht. Aufgrund des großen Platzbedarfes sind die bekannten Portalwaschanlagen mit zwei Portalen nicht für den Einbau in Standard-Waschhallen der Benzingesellschaften geeignet. Portalwaschanlagen mit nur einem Portal haben zwar einen geringeren Platzbedarf, jedoch nur eine geringe Waschkapazität.

Der Erfindung liegt daher die Aufgabe zugrunde, ein Verfahren und auch eine Portalwaschanlage zum Waschen von Kraftfahrzeugen der eingangs erwähnten Art aufzuzeigen, die einen geringeren Platzbedarf erfordern als bisher bekannte Portalwaschanlagen mit zwei Portalen und die trotzdem einen hohen Fahrzeugdurchsatz ermöglichen.

Ausgehend von einem Verfahren der eingangs genannten Art ist das erfindungsgemäße Verfahren dadurch gekennzeichnet, daß das Waschen außer mit den beiden Horizontalbürsten mit einem einzigen Paar von Vertikalbürsten durchgeführt wird, welche zwischen den beiden Horizontalbürsten waschen und an einem der beiden Portale angeordnet sind, daß bei einem Vorwärtslauf der Portale der Waschprozeß mit der ersten Horizontalbürste im vorderen Fahrzeugdrittel begonnen wird, während mit den beiden Vertikalbürsten die Frontwäsche durchgeführt wird, daß anschließend mit der zweiten Horizontalbürste die Fahrzeugfront und die Fahrzeugoberseite etwa bis zum hinteren Fahrzeugdrittel gewaschen wird, daß die Fahrtrichtung der Portale umgekehrt wird, sobald mit den beiden Vertikalbürsten die Heckwäsche durchgeführt wurde und bevor die zweite Horizontalbürste das Fahrzeugheck erreicht hat, daß beim Rückwärtslauf der beiden Portale das Waschen mit den Bürsten fortgesetzt wird bis die Vertikalbürsten die Fahrzeugfront passiert haben und daß dann das erste Portal stillgesetzt wird, während sich die erste Horizontalbürste noch im Bereich oberhalb des ersten Fahrzeugdrittels befindet.

Ausgehend von einer Portalwaschanlage für Fahrzeuge der eingangs erwähnten Art sieht die Erfindung vor, daß die Portalwaschanlage ein einziges Paar von Vertikalbürsten enthält, die zwischen den beiden Horizontalbürsten an einem der beiden Portale angeordnet sind und daß die Portalwaschanlage eine Steuereinrichtung aufweist, welche die Portale von Vorwärts- auf Rückwärtslauf umschaltet, bevor die zweite Horizontalbürste das Fahrzeugheck erreicht hat und welche den Rückwärtslauf der Portale beendet, sobald die Vertikalbürsten die Fahrzeugfront passiert haben und sich die erste Horizontalbürste noch im Bereich oberhalb des ersten Fahrzeugdrittels befindet.

Die Erfindung geht also von dem Gedanken aus, sowohl beim Vorwärtslauf der Portale als auch bei ihrem Rückwärtslauf die beiden Portale nicht über die gesamte Fahrzeuglänge hinaus zu bewegen, sondern den Portallauf jeweils zu beenden, wenn sich noch eine der beiden Dachbürsten im Bereich oberhalb des vorderen bzw. hinteren Fahrzeugdrittels befindet. Hierdurch und durch die Verwendung von nur einem Vertikalbürstenpaar, welches zwischen den Horizontalbürsten angeordnet ist, erfordert die Portalwaschanlage zusätzlich zur Fahrzeuglänge vor und hinter dem Fahrzeug nur die Einbaulänge eines einzigen Portals. Deshalb kann das erfindungsgemäße Verfahren in Standardwaschhallen der Bezingesellschaften durchgeführt bzw. die erfindungsgemäße Portalwaschanlage aufgestellt werden, in denen sonst nur eine Portalwaschanlage mit einem einzigen Portal Platz findet.

Da der Waschvorgang mit der ersten Horizontalbürste begonnen wird, während diese sich bereits im Bereich des vorderen Fahrzeugdrittels etwa in der Mitte der Motorhaube befindet, da die Fahrtrichtung der Portale umgekehrt wird, noch bevor die zweite Horizontalbürste das Fahrzeugheck erreicht hat, und da beim Rücklauf der Portale das erste Portal bereits stillgesetzt wird, während sich die erste Horizontalbürste noch im Bereich oberhalb des ersten Fahrzeugdrittels befindet, wird eine erhebliche Verkürzung der Fahrwege der Portale erreicht, was zu einer Verkürzung der Waschzeit führt und damit einen höheren Fahrzeugdurchsatz pro Stunde ermöglicht.

Vorteilhafte Ausgestaltungen der Erfindung sind in den Unteransprüchen gekennzeichnet. Die Erfindung wird in folgendem, anhand von in der Zeichnung dargestellten Ausführungsbeispielen näher erläutert.
Es zeigen:
- Figur 1 - 5: verschiedene Stellungen der Portale vom Beginn bis zum Ende des Waschprozesses,
- Figur 6 - 8: verschiedene Stellungen der Portele beim Trocknungsprozeß mit zwei Trocknungseinrichtungen,
- Figur 9: die Umkehrstellung der Portale beim Trocknungsprozeß mit einer Trocknungsvorrichtung.

Die in der Zeichnung dargestellte Portaluaschanlage ist mit zwei verfahrbaren Portalen A und B ausgerüstet. Vorzugsweise sind beide Portale A, B miteinander gekuppelt, was beispielsweise mittels einer an jeder Portalseite vorgesehenen Kupplungsstange 1 erfolgen kann. Gegebenenfalls könnten die Portale A, B auch einzelverfahrbar sein, jedoch ist die gekuppelte Ausführung vorzuziehen, weil dies erhebliche Vereinfachungen bei einem der beiden Portale ergibt. Bei dem Portal A, welches im folgenden als erstes Portal bezeichnet wird, handelt es sich um ein voll ausgerüstetes Portal mit einer um eine horizontale Achse 2 rotierenden Waschbürste 3, die als Horizontalbürste oder Dachbürste bezeichnet wird und die höhenbeweglich im ersten Portal A angeordnet ist. Das erste Portal A weist außerdem ein Paar von um vertikale Achsen 4 rotierenden waschbürsten 5 auf, die als Vertikalbürsten oder Seitenbürsten bezeichnet sind und die in dem ersten Portal A quer zur Fahrtrichtung derselben beweglich gelagert sind. Die Vertikalbürsten 5 sind dabei auf der dem zweiten Portal B zugekehrten Seite des ersten Portals A angeordnet. Das erste Portal weist ferner eine Trocknungseinrichtung auf, von der in der Zeichnung jedoch nur die höhenbewegliche Horizontaldüse 7, auch Dachdüse genannt, und eine Vertikaldüse 8, auch Seitendüse genannt, dargestellt sind. In Wirklichkeit sind jedoch in dem Portal A zwei Vertikaldüsen 8 vorhanden, je eine für jede Seite, die entweder stationär oder auch seitenbeweglich am Portal A angeordnet sind. Zum Antrieb des ersten Portales A ist an jeder Portalseite ein Antriebsmotor 9 vorgesehen. An dem ersten Portal A können ebenso wie beim zweiten Portal nicht dargestellte Auftragsvorrichtungen für Wasch-, Spül-, Trocken- und/oder Konservierungsmittel vorgesehen sein und gegebenenfalls auch eine Unterbodenwascheinrichtung und/oder eine Hochdruckwascheinrichtung. Die gesamte Steuerung für die Portalwaschanlage sowie die Wasserverteilung, die Dosierpumpen und weitere Einrichtungen sind ebenfalls in das erste Portal A integriert.

Das zweite Portal B weist die um eine horizontale Achse 10 rotierende zweite Horizontalbürste 11, jedoch keine Vertikalbürsten auf. Das zweite Portal B kann außerdem mit einer kompletten Trocknungseinrichtung ausgestattet sein, von der jedoch nur die Horizontaldüse 7' und die Vertikaldüse 8' dargestellt sind. Ferner kann an dem zweiten Portal B eine Radwascheinrichtung 12 angeordnet sein. Bei Bewegung des ersten Portals A wird das zweite Portal B über die Kupplungsstangen 1 mitgenommen. Eine Steuerung, ein Antriebsmotor und dgl. sind für das zweite Portal B nicht erforderlich. Das zweite Portal B kann vom ersten Portal aus mit Wasser, Waschmittel, Spülmittel, Konservierungsmittel usw. versorgt werden. Gegebenenfalls wäre es auch denkbar, die beiden Portale A und B zu einem einzigen Portal zusammenzufassen. Die in der Zeichnung dargestellte getrennte Ausbildung der Portale A und B ist jedoch vorzuziehen, weil dann das erste Portal A ein Standardportal ist und beim Bau des zweiten Portales B weitgehend die gleichen Bauteile und Baugruppen verwendet werden können wie für das erste Portal A. Außerdem hat die getrennte Ausgestaltung auch den Vorteil, daß eine bereits bestehende Portalwaschanlage mit nur einem Portal durch Anhängung des zweiten Portals B nachgerüstet und dadurch die Kapazität einer bereits bestehenden erhöht werden kann, ohne daß hierfür dank der Erfindung mehr Platz für das Verfahren und Parken der beiden Portale erforderlich wäre.

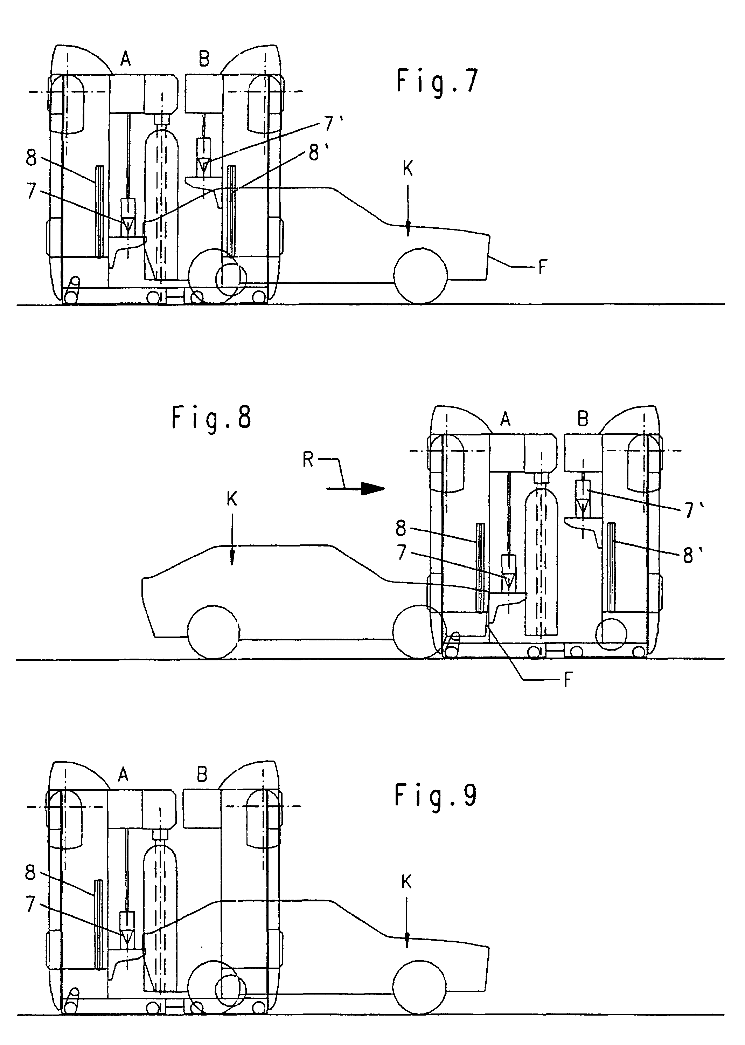

Gegebenenfalls kann eine Trocknungseinrichtung am zweiten Portal B auch entfallen, wie es in Figur 9 dargestellt ist.

Die beiden Portale A und B könnten gegebenenfalls auch vertauscht sein, so daß das Portal B gemäß den Zeichnungen links angeordnet wäre und dann das erste Portal bildet, während dann das Portal A rechts vorgesehen wäre und das zweite Portal bildet. Hierbei müßten jedoch die beiden Portale jeweils um 180° gedreht werden, damit auch in diesem Fall sichergestellt ist, daß die beiden Vertikalbürsten 5 zwischen den Horizontalbürsten 3 und 11 angeordnet sind. Nur auf diese Weise ist nämlich die platzsparende Unterbringung der beiden Portale A und B möglich. In ähnlicher Weise sollten auch die Horizontaldüsen 7, 7' an den einander zugekehrten Seiten der beiden Portale A, B, d.h. zwischen den beiden Horizontalbüsten 3, 11 angeordnet sein.

Mit der beschriebenen Portalwaschanlage wird das Waschen und Trocknen eines Kraftfahrzeuges K wie folgt durchgeführt:

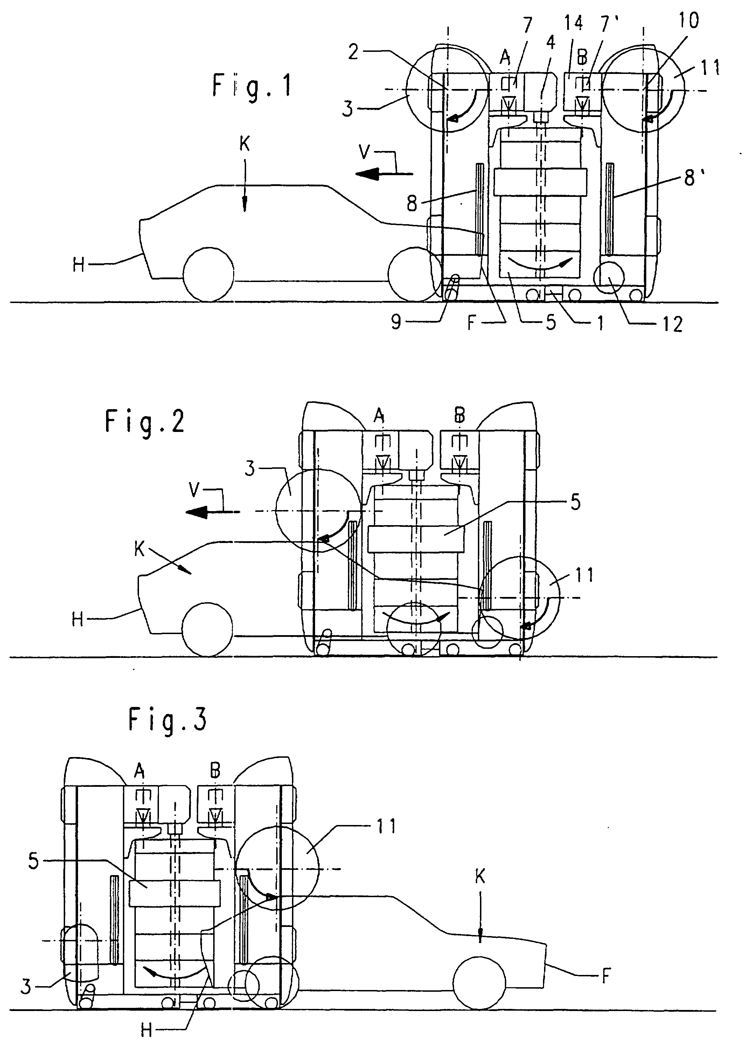

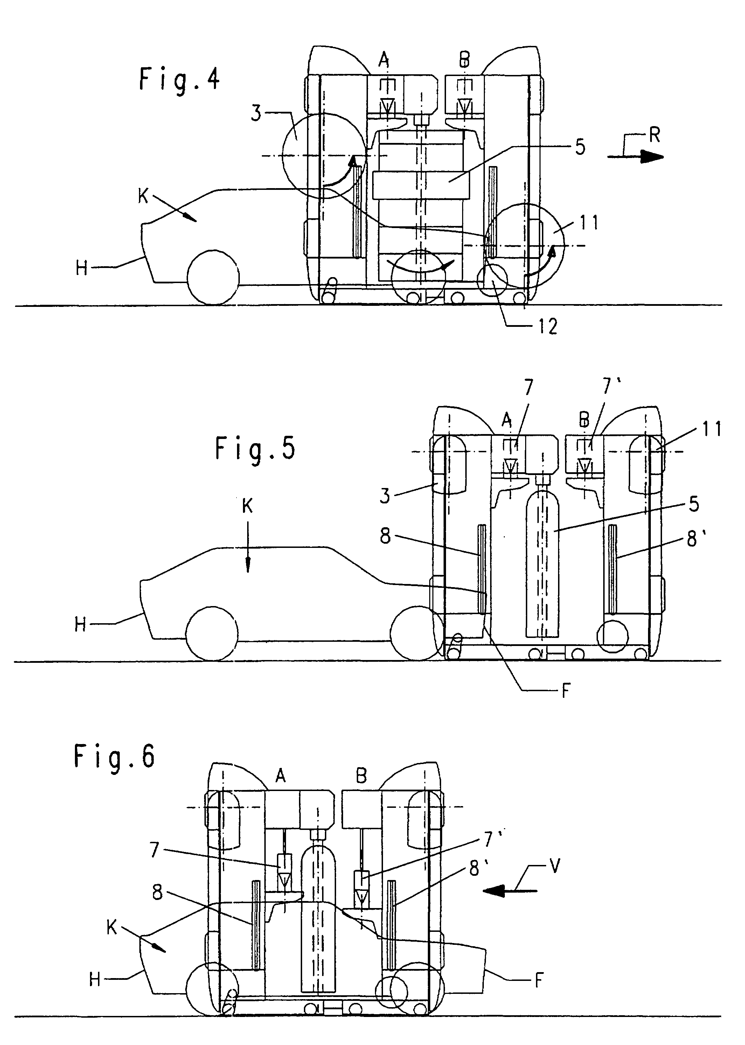

In Figur 1 sind die beiden Portale A, B in ihrer Ausgangsstellung dargestellt. Das erste Portal A ist dabei so angeordnet, daß sich seine Vertikalbürsten 5 vor der Fahrzeugfront F befinden und seine Horizontalbürste 3 oberhalb des vorderen Drittels des Kraftfahrzeuges K. In dieser Stellung des ersten Portals A werden die Bürsten 5, 2 in Rotation versetzt und mit den Uertikalbürsten 5 wird zunächst die Fahrzeugfront F gewaschen. Die erste Horizontalbürste 2 wird zur Motorhaube des Fahrzeuges K abgesenkt. Sobald die beiden Vertikalbürsten die beiden vorderen Fahrzeugecken erreicht haben, werden die beiden Portale A und B in Pfeilrichtung V in Bewegung gesetzt und führen einen Vorwärtslauf aus. Die erste Horizontalbürste 2 beginnt dabei mit dem Waschprozeß etwa in der Mitte der Motorhaube. Es wird jetzt auch die im zweiten Portal B enthaltene Horizontalbürste 11 abgesenkt. Diese kommt bei weiterer Bewegung der beiden Portale A, B in Richtung V, wie es in Figur 2 dargestellt ist, mit der Fahrzeugfront in Berührung und wäscht die Fahrzeugfront ein zweites Mal. Bei weiterem Vorwärtslauf der beiden Portale in Richtung V werden dann von der zweiten Horizontalbürste 11 auch die von der ersten Horizontalbürste 3 nicht gewaschenen Bereiche der Motorhaube gewaschen, während die Horizontalbürste 2 die Dachpartie wäscht und die Vertikalbürsten 5 die Seitenflächen des Fahrzeuges waschen. Wenn die Vertikalbürsten 5 am Fahrzeugheck angelangt sind, bewegen sie sich aufeinander zu zur Fahrzeugmitte und waschen das Fahrzeugheck H. Sie führen dabei auch eine sogenannte Mittenüberdeckung aus. Während der Heckwäsche sind beide Portale A, B stillgesetzt. Die zweite Horizontalbürste 11 wäscht je nach Fahrzeugtyp nur bis zum Ende des Daches oder bis zur Heckscheibe. Sie gelangt nicht bis zum Fahrzeugheck H. Auf diese Weise wird erreicht, daß in der in Figur 3 dargestellten Umkehrstellung der Portale A, B nur das erste Portal A Platz hinter dem Fahrzeug K benötigt. Wenn die Vertikalbürsten 5 die Mittenüberdeckung ausgeführt haben, werden sie wieder gegenläufig nach außen bewegt und waschen dabei das Fahrzeugheck ein zweites Mal. Wenn sie die beiden hinteren Fahrzeugecken erreicht haben, schaltet die Steuereinrichtung auf Rückwärtslauf um und beide Portale A, B werden in Richtung R bewegt, wobei das erste Portal A das zweite Portal B vor sich herschiebt. Mit der ersten Dachbürste 3 wird das Fahrzeugheck H ein drittes Mal gewaschen und anschließend wäscht die Horizontalbürste 3 auch die Heckscheibe und das Dach oder einen Teil desselben. Die zweite Horizontalbürste 11 wäscht das Dach, die Frontscheibe und die Motorhaube. Die Seitenflächen des Fahrzeuges werden durch die Vertikalbürsten 5 beim Rücklauf in Richtung R ein zweites Mal gewaschen. Wenn die Portale A, B so weit zurückbewegt wurden, daß die erste Horizontalbürste 3 den vorderen Bereich des Daches und die zweite Waschbürste 11 das vordere Ende der Motorhaube erreicht hat, können beide Horizontalbürsten 3, 11 gemäß Figur 4 nach oben abgehoben werden. Die Vertikalbürsten 5 waschen dann noch die Seitenflächen des Fahrzeuges K zu Ende. Wenn die Vertikalbürsten 5 an der Fahrzeugfront F vorbeibewegt sind, werden durch die Steuereinrichtung beide Portale stillgesetzt. Sie nehmen dann die in Figur 5 dargestellte Stellung ein, wobei sich die horizontale Waschbürste oberhalb des vorderen Drittels des Fahrzeuges befindet und auch etwa die Hälfte des ersten Portales A noch im Bereich des Fahrzeuges K ist. Der restliche Teil des ersten Portales A und auch das zweite Portal B befinden sich vor der Fahrzeugfront F und nehmen dabei zusammen vor dem Fahrzeug K so viel Platz ein, wie ein normales, mit Horizontalbürste und Vertikalbürsten voll ausgerüstetes Portal in Anspruch nehmen würde.
Da bei dem zweiten Portal B nämlich die Vertikalbürsten fehlen und die rotierenden Vertikalbürsten 5 des ersten Portales, wie es in Figur 1 dargestellt ist, noch unter die Traverse 14 des zweiten Portales B eingreifen können, entspricht der Platzbedarf des zweiten Portales B in Fahrzeuglängsrichtung nur etwa der Hälfte eines voll ausgerüsteten Portals. Dadurch, daß die erste Waschbürste 2 den Waschprozeß erst etwa in der Mitte der Motorhaube beginnt und die zweite Waschbürste 11 nur bis zum hinteren Bereich des Fahrzeugdaches bewegt wird, wird der Fahrweg beider Portale A, B und damit auch die Gesamtfahrzeit für Vorwärtslauf und Rückwärtslauf verkürzt. Es kann damit der Fahrzeugdurchsatz pro Stunde gesteigert werden.

Ohne wesentliche Verlängerung der Waschzeit vom Fahrzeug kann gegebenenfalls beim Vorwärtslauf der Portale auch eine Unterbodenwäsche durchgeführt werden und beim Rückwärtslauf eine Radwäsche mit der Radwascheinrichtung 12. Wenn hierbei die beiden Portale A, B starr miteinander gekuppelt sind, müssen sie allerdings während der Radwäsche kurzzeitig stillgesetzt werden. Es ist auch möglich, während des Rückwärtslaufes Wachs-Polish und/oder Unterbodenwachs aufzutragen.

Um einen besonders guten Trocknungseffekt zu erreichen, sind zweckmäßig beide Portale A, B jeweils mit kompletten Trocknungseinrichtungen ausgerüstet. Ausgehend von der in Figur 5 dargestellten Endstellung beider Portale A, B, die diese nach Beendigung des Waschprozesses einnehmen, werden die Trocknungseinrichtungen in Betrieb gesetzt und beide Portale A, B bei einem weiteren Vorwärtslauf im Schnellgang so weit bewegt, bis die erste Horizontaldüse 7 des ersten Portals A etwa die Fahrzeugmitte erreicht hat, wie es in Figur 6 dargestellt ist. Beide Portale werden dann mit Normalgeschwindigkeit im Vorwärtslauf weiterbewegt, bis die erste Horizontaldüse 7 die Hecktrocknung durchgeführt hat, wie es in Figur 7 dargestellt ist. Durch die Steuereinrichtung werden dann beide Portale A, B auf Rückwärtslauf in Richtung R umgeschaltet und die Trocknung fortgesetzt, bis sich gemäß Figur 8 die erste Horizontaldüse wieder vor der Fahrzeugfront F befindet. Es werden dann beide Portale A, B stillgesetzt und beide Horizontaldüsen 7, 7' nach oben verfahren, so daß die Portale A, B wieder ihre in Figur 1 dargestellte Ausgangsstellung einnehmen. Die Vorlaufbewegung beider Portale A, B im Schnellgang bringt eine Zeiteinsparung, ohne daß das Trocknungsergebnis beeinträchtigt wird. Während sich nämlich die Portale im Vorwärtslauf bis zum Fahrzeugheck bewegen und dann im Rückwärtslauf wieder zurück, kann das Wasser von der Motorhaube weitgehend abfließen, so daß hier eine einmalige Trocknung mit den Horizontaldüsen 7, 7' und den Vertikaldüsen 8, 8' genügt. Eine weitere Zeiteinsparung wird auch dadurch erreicht, daß die Portale auf Rückwärtslauf umgeschaltet werden, noch bevor die zweite Horizontaldüse 7' bis zum Fahrzeugheck gelangt ist. Wenn der Auftrag von Schaumwachs gewünscht wird, dann kann dieses beim zweiten Vorwärtslauf der Portale von dem ersten Portal A aufgetragen werden, während das zweite Portal B das Spülen übernimmt. Das Trocknen des Fahrzeuges erfolgt dann nur beim zweiten Rückwärtslauf der Portale A, B, so daß auch eine Komfortwäsche mit Schaumwachs und gegebenenfalls Unterbodenpflege in nur zwei Vorwärtsläufen und zwei Rückwärtsläufen der Portale durchgeführt werden kann, wobei eine Verkürzung der Behandlungszeit durch die beschriebene Verkürzung der Fahrwege der Portale erreicht wird.

Selbstverständlich können mit der neuen Portalwaschanlage auch aufwendigere Wasch- und Konservierungsprogramme, wie z.B. chemische Vorwäsche, Felgenspezialwäsche, Schaumauftrag, Hochdruckwäsche usw. durchgeführt werden, wozu allerdings eine weitere Vorwärtsund eine weitere Rückwärtsbewegung beider Portale erforderlich sind.

## Patentansprüche

1. Verfahren zum Waschen von Kraftfahrzeugen mit Dachund Seitenwäsche (2, 11; 5) in einer Portalwaschanlage, mit zwei verfahrbaren Portalen (A, B), von denen jedes eine um eine horizontale Achse (3, 10) rotierende Waschbürste (2, 11) bzw. Horizontalbürste enthält, und mit um vertikale Achsen (4) rotierenden Waschbürsten bzw. Vertikalbürsten (15), **dadurch gekennzeichnet, daß** das Waschen außer mit den beiden Horizontalbürsten (2, 11) mit einem einzigen Paar von Vertikalbürsten (5) durchgeführt wird, welche zwischen den beiden Horizontalbürsten waschen und an einem (A) der beiden Portale (A, B) angeordnet sind, daß bei einem Vorwärtslauf der Portale (A, B) der Waschprozeß mit der ersten Horizontalbürste (2) im vorderen Fahrzeugdrittel begonnen wird, während mit den beiden Vertikalbürsten (5) die Frontwäsche (F) durchgeführt wird, daß anschließend mit der zweiten Horizontalbürste (11) die Fahrzeugfront und die Fahrzeugoberseite etwa bis zum hinteren Fahrzeugdrittel gewaschen wird, daß die Fahrtrichtung die der Portale umgekehrt wird, sobald mit den beiden mit den Vertikalbürsten (5) die Heckwäsche (H) durchgeführt wurde und bevor die zweite Horizontalbürste (11) das Fahrzeugheck erreicht hat, daß beim Rückwärtslauf (R) der beiden Portale (A, B) das Waschen mit den Bürsten fortgesetzt wird bis die Vertikalbürsten (5) die Fahrzeugfront (F) passiert haben und daß dann das erste Portal (A) stillgesetzt wird, während sich die erste Horizontalbürste (2) nach im Bereich oberhalb des ersten Fahrzeugdrittels befindet.

2. Verfahren nach Anspruch 1, **dadurch gekennzeichnet, daß** die Radwäsche mit einer am zweiten Portal angeordneten Radwascheinrichtung beim Rückwärtslauf des zweiten Portals durchgeführt wird.

3. Verfahren nach Anspruch 1 oder 2, **dadurch gekennzeichnet, daß** das Waschen mit zwei Portalen durchgeführt wird, die miteinander gekuppelt sind.

4. Verfahren nach einem der Ansprüche 1 bis 3, **dadurch gekennzeichnet, daß** in einem weiteren Vorwärts- und Rückwärtslauf das Trocknen des Fahrzeuges mit an beiden Portalen vorgesehenen Trocknungseinrichtungen durchgeführt wird, wobei beide Portale beim Vorwärtslauf im Schnellgang bewegt werden bis die Horizontaldüse des ersten Portals etwa die Fahrzeugmitte erreicht hat, dann beide Portale mit Normalgeschwindigkeit im Vorwärtslauf weiterbewegt werden, bis die erste Horizontaldüse die Hecktrocknung durchgeführt hat, und daß dann die Portale auf Rückwärtslauf umgeschaltet und die Trocknung fortgesetzt wird bis sich die erste Horizontaldüse des ersten Portals vor der Fahrzeugfront befindet.

5. Verfahren nach einem der Ansprüche 1 bis 3, **dadurch gekennzeichnet, daß** die Trocknung mit einer Trocknungseinrichtung durchgeführt wird, die am ersten, die erste Horizontalbürste tragenden Portal angeordnet ist.

6. Portalwaschanlage, für Kraftfahrzeuge, mit zwei verfahrbaren Portalen (A, B), von denen jedes eine um eine horizontale Achse rotierende Waschbürste (2, 11) bzw. Horizontalbürste enthält, und mit um vertikale Achsen (4) rotierenden Waschbürsten (5) bzw. Vertikalbürsten, **dadurch gekennzeichnet, daß** die Portalwaschanlage ein einziges Paar von Vertikalbürsten (5) enthält, die zwischen den beiden Horizontalbürsten (3, 11) an einem der beiden Portale (A, B) angeordnet sind, und daß die Portalwaschanlage eine Steuereinrichtung aufweist, welche die Portale (A, B) von Vorwärtslauf auf Rückwärtslauf umschaltet, bevor die zweite Horizontalbürste (11) das Fahrzeugheck (H) erreicht hat und welche den Rückwärtslauf der Portale (A, B) beendet, sobald die Vertikalbürsten (5) die Fahrzeugfront (F) passiert haben und sich die erste Horizontalbürste (3) noch im Bereich oberhalb des ersten Fahrzeugdrittels befindet.

7. Portalwaschanlage nach Anspruch 6, **dadurch gekennzeichnet, daß** die Vertikalbürsten (5) am ersten Portal (A) angeordnet sind, mit dessen Horizontalbürste (3) der Waschprozeß begonnen wird.

8. Portalwaschanlage nach Anspruch 6 oder 7, **dadurch gekennzeichnet, daß** am zweiten Portal (B) eine Radwascheinrichtung (12) angeordnet ist.

9. Portalwaschanlage nach einem der Ansprüche 6 bis 8, **dadurch gekennzeichnet, daß** die beiden Portale (A, B) miteinander gekuppelt sind und die Steuereinrichtung, Wasserverteilung und die Dosierpumpen für beide Portale (A, B) in einem von diesem angeordnet ist.

10. Portalwaschanlage nach einem der Ansprüche 6 bis 8, **dadurch gekennzeichnet, daß** am ersten Portal (A) eine komplette Trocknungseinrichtung mit einer Horizontaldüse (7) und zwei Vertikaldüsen (8) vorgesehen ist.

11. Portalwaschanlage nach einem der Ansprüche 6 bis 8, **dadurch gekennzeichnet, daß** an jedem der beiden Portale (A, B) je eine komplette Trocknungseinrichtung mit jeweils einer Horizontaldüse (7, 7') und zwei Vertikaldüsen (8, 8') angeordnet ist.

12. Portalwaschanlage nach Anspruch 10 oder 11, **dadurch gekennzeichnet, daß** die Horizontaldüse(n) (7, 7') der Trocknungseinrichtung(en) an den einander zugekehrten Seiten der beiden Portale (A, B) angeordnet sind.

13. Portalwaschanlage nach einem der Ansprüche 6 bis 12, **dadurch gekennzeichnet, daß** an den Portalen (A, B) Auftragsvorrichtungen für Wasch-, Spül-, Trockenund/oder Konservierungsmittel vorgesehen sind.

## Claims

1. Method for washing motor vehicles with roof and side washing (2, 11; 5) in a portal washing installation, with two displaceable portals (A, B), each of which comprises a washing brush (2, 11) rotating about a horizontal axis (3, 10) or horizontal brush, and with washing brushes rotating about vertical axes (4) or vertical brushes (5), **characterised in that** the washing is carried out, apart from with the two horizontal brushes (2, 11), with a single pair of vertical brushes (5) which wash between the two horizontal brushes and are arranged on one (A) of the two portals (A, B), **in that** with a forward movement of the portals (A, B), the washing process is started with the first horizontal brush (2) in the front third of the vehicle while the washing of the front (F) is carried out with the two vertical brushes (5), **in that** then the front of the vehicle and the upper side of the vehicle roughly to the rear third of the vehicle are washed with the second horizontal brush (11), **in that** the direction of travel of the portals is reversed as soon as the washing of the rear (H) has been carried out with the two vertical brushes (5) and before the second horizontal brush (11) has reached the rear of the vehicle, **in that** with the rearward movement (R) of the two portals (A, B), the washing is continued with the brushes until the vertical brushes (5) having passes the front (F) of the vehicle and **in that** then the first portal (A) is stopped while the first horizontal brush (2) is still in the area above the first third of the vehicle.

2. Method according to claim 1, **characterised in that** the wheel washing is carried out with a wheel washing device arranged on the second portal during the rearward movement of the second portal.

3. Method according to claim 1 or 2, **characterised in that** the washing is carried out with two portals which are coupled to one another.

4. Method according to one of claims 1 to 3, **characterised in that** in a further forward and rearward movement the drying of the vehicle is carried out with drying devices provided on both portals, both portals being moved at high speed during the forward movement until the horizontal nozzle of the first portal has reached roughly the middle of the vehicle, then both portals are moved onwards in the forward direction at normal speed until the first horizontal nozzle has carried out the drying of the rear, and **in that** then the portals are switched to rearward movement and the drying is continued until the first horizontal nozzle of the first portal is located in front of the front of the vehicle.

5. Method according to one of claims 1 to 3, **characterised in that** the drying is carried out with a drying device which is arranged on the first portal carrying the first horizontal brush.

6. Portal washing installation for motor vehicles, with two displaceable portals (A, B), each of which comprises a washing brush (2, 11) rotating about a horizontal axis or horizontal brush, and with washing brushes (5) rotating about vertical axes (4) or vertical brushes, **characterised in that** the portal washing installation comprises a single pair of vertical brushes (5) which are arranged between the two horizontal brushes (3, 11) on one of the two portals (A, B), and **in that** the portal washing installation exhibits a control device which switches the portals (A, B) from forward movement to rearward movement before the second horizontal brush (11) has reached the rear (H) of the vehicle and which ends the rearward movement of the portals (A, B) as soon as the vertical brushes (5) have passed the front (F) of the vehicle and the first horizontal brush (3) is still in the area above the first third of the vehicle.

7. Portal washing installation according to claim 6, **characterised in that** the vertical brushes (5) are arranged on the first portal (A) with whose horizontal brush (3) the washing process is started.

8. Portal washing installation according to claim 6 or 7, **characterised in that** a wheel washing device (12) is arranged on the second portal (B).

9. Portal washing installation according to one of claims 6 to 8, **characterised in that** the two portals (A, B) are coupled with one another and the control device, water distribution and the metering pumps for the two portals (A, B) are arranged in one of these.

10. Portal washing installation according to one of claims 6 to 8, **characterised in that** a complete drying device with a horizontal nozzle (7) and two vertical nozzles (8) is provided on the first portal (A).

11. Portal washing installation according to one of claims 6 to 8, **characterised in that** a complete drying device with in each case one horizontal nozzle (7, 7') and two vertical nozzles (8, 8') is arranged on each of the two portals (A, B).

12. Portal washing installation according to claim 10 or 11, **characterised in that** the horizontal nozzle or nozzles (7, 7') of the drying device or devices are arranged on the facing sides of the two portals (A, B).

13. Portal washing installation according to one of claims 6 to 12, **characterised in that** application devices for washing, rinsing, drying and/or preservative means are provided on the portals (A, B).

## Revendications

1. Procédé de lavage de véhicules automobiles avec lavage du toit et lavage latéral (2, 11 ; 5) dans une station de lavage à portiques, comprenant deux portiques (A, B) mobiles, équipés chacun d'une brosse de lavage (2, 11), à savoir une brosse horizontale, entraînée en rotation autour d'un axe horizontal (3, 10), et comprenant des brosses de lavage, à savoir des brosses verticales (5), entraînées en rotation autour d'axes verticaux (4), **caractérisé en ce que** le lavage est exécuté, en plus des deux brosses horizontales (2, 11), avec une seule paire de brosses verticales (5), qui effectuent le lavage entre les deux brosses horizontales et qui sont montées contre l'un des deux portiques (A, B), **en ce que**, au cours de la marche avant des portiques (A, B), la première brosse horizontale (2) commence le processus de lavage dans le tiers avant du véhicule, alors que les deux brosses verticales (5) effectuent le lavage de l'avant du véhicule (F), **en ce que** la deuxième brosse horizontale (11) exécute ensuite le lavage de l'avant du véhicule et le lavage de la face supérieure du véhicule pratiquement jusqu'au niveau du tiers arrière du véhicule, **en ce que** le sens de déplacement des portiques est inversé dès que les deux brosses verticales (5) ont exécuté le lavage de l'arrière du véhicule et avant que la deuxième brosse horizontale (11) ait atteint l'arrière du véhicule, **en ce que**, au cours de la marche arrière des deux portiques (A, B), le lavage au moyen des brosses se poursuit jusqu'à ce que les brosses verticales (5) aient dépassé l'avant du véhicule et **en ce que** le premier portique (A) est ensuite immobilisé, alors que la première brosse horizontale (2) se situe encore dans la zone au-dessus du premier tiers du véhicule.

2. Procédé selon la revendication 1, **caractérisé en ce que** le lavage des roues est effectué pendant la marche arrière du deuxième portique, au moyen d'un dispositif de lavage des roues, monté contre le deuxième portique.

3. Procédé selon la revendication 1 ou 2, **caractérisé en ce que** le lavage est effectué avec deux portiques qui sont couplés l'un avec l'autre.

4. Procédé selon une des revendications 1 à 3, **caractérisé en ce que**, au cours d'une marche avant et d'une marche arrière supplémentaires, le séchage du véhicule est exécuté au moyen de dispositifs de séchage prévus sur les deux portiques, sachant que, pendant la marche avant, les deux portiques se déplacent à grande vitesse jusqu'à ce que la buse horizontale du premier portique ait atteint sensiblement le milieu du véhicule, puis les deux portiques continuent à se déplacer en marche avant à vitesse normale jusqu'à ce que la première buse horizontale ait exécuté le séchage de l'arrière du véhicule, et **en ce que** le sens de déplacement des deux portiques est ensuite inversé en marche arrière et le séchage est poursuivi jusqu'à ce que la première buse horizontale du premier portique se situe devant l'avant du véhicule.

5. Procédé selon une des revendications 1 à 3, **caractérisé en ce que** le séchage est effectué avec un dispositif de séchage qui est monté sur le premier portique supportant la première brosse horizontale.

6. Station de lavage à portiques pour véhicules automobiles, comprenant deux portiques (A, B) mobiles, dont chacun est équipé d'une brosse de lavage (2, 11), à savoir une brosse horizontale, entraînée en rotation autour d'un axe horizontal (3, 10), et comprenant des brosses de lavage (5) à savoir des brosses verticales, entraînées en rotation autour d'axes verticaux (4), **caractérisée en ce que** la station de lavage à portiques comporte une seule paire de brosses verticales (5), qui sont montées entre les deux brosses horizontales (3, 11) sur l'un des deux portiques (A, B), et **en ce que** la station de lavage à portiques comporte une unité de commande, qui inverse le déplacement des portiques (A, B) de la marche avant vers la marche arrière avant que la deuxième brosse horizontale (11) ait atteint l'arrière du véhicule (H) et qui stoppe la marche arrière des portiques (A, B) dès que les brosses verticales (5) ont dépassé l'avant du véhicule (F) et lorsque la première brosse horizontale (3¹) se situe encore dans la zone au-dessus du premier tiers du véhicule.

7. Station de lavage à portiques selon la revendication 6, **caractérisée en ce que** les brosses verticales (5) sont montées contre le premier portique (A), qui est équipé de la brosse horizontale (3) avec laquelle débute le processus de lavage.

8. Station de lavage à portiques selon la revendication 6 ou 7, **caractérisée en ce qu'**un dispositif de lavage des roues (12) est monté contre le deuxième portique (B).

9. Station de lavage à portiques selon une des revendications 6 à 8, **caractérisée en ce que** les deux portiques (A, B) sont couplés l'un avec l'autre et l'unité de commande, la distribution d'eau et les pompes de dosage pour les deux portiques (A, B) sont montées dans l'un des portiques.

10. Station de lavage à portiques selon une des revendications 6 à 8, **caractérisée en ce qu'**un dispositif de séchage complet, muni d'une buse horizontale (7) et de deux buses verticales (8), est prévu sur le premier portique (A).

11. Station de lavage à portiques selon une des revendications 6 à 8, **caractérisée en ce que**, sur chacun des deux portiques (A, B), il est prévu un dispositif de séchage complet équipé chacun d'une buse horizontale (7, 7') et de deux buses verticales (8, 8').

12. Station de lavage à portiques selon la revendication 10 ou 11, **caractérisée en ce que** les buses horizontales (7, 7') du/des dispositif(s) de séchage sont disposées sur les côtés face à face des deux portiques (A, B).

13. Station de lavage à portiques selon une des revendications 6 à 12, **caractérisée en ce que** des dispositifs d'application des produits de nettoyage, de rinçage, de séchage et/ou de conservation sont prévus sur les portiques (A, B).
